(19) Europäisches Patentamt
European Patent Office
Office européen des brevets

(11) Veröffentlichungsnummer: **0 235 084**
**B1**

(12) # EUROPÄISCHE PATENTSCHRIFT

(45) Veröffentlichungstag der Patentschrift: **09.01.91**

(51) Int. Cl.$^5$: **C 08 F 226/06**, C 08 F 222/40, C 08 F 212/32

(21) Anmeldenummer: **87810087.4**

(22) Anmeldetag: **16.02.87**

(54) **Heisshärtbare Stoffgemische enthaltend substituierte Bicyclo 2.2.1rhept-5-en-2,3-dicarbonsäureimide und Polymaleinimide.**

(30) Priorität: **21.02.86 US 831687**

(43) Veröffentlichungstag der Anmeldung:
**02.09.87 Patentblatt 87/36**

(45) Bekanntmachung des Hinweises auf die Patenterteilung:
**09.01.91 Patentblatt 91/02**

(84) Benannte Vertragsstaaten:
**CH DE FR GB IT LI NL SE**

(56) Entgegenhaltungen:
**EP-A-0 105 024**
**EP-A-0 175 648**
**US-A-4 100 140**

(73) Patentinhaber: **CIBA-GEIGY AG**
**Klybeckstrasse 141**
**CH-4002 Basel (CH)**

(72) Erfinder: **Liu, Marie W.**
**11808 Zircon Court**
**Fountain Valley, CA 92708 (US)**
Erfinder: **Ho, Victor**
**20242 Windcave Lane**
**Huntington Beach, CA 92646 (US)**

**EP 0 235 084 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die EP—A—105 024 beschreibt allyl- oder methallylsubstituierte Bicyclo[2.2.1]hept-5-en-2,3-dicarbonsäureimide und deren Verwendung für die Herstellung von Polymeren durch Erhitzen der Imide auf Temperaturen von 180 bis 300°C. Es ist auch bekannt, das Polymaleinimide mit oder ohne Zugabe von Vernetzungsreagentien wie z.B. Diaminen oder Alkenylphenolen zu vernetzten Produkten umgesetzt werden können (z.B. US 3,562,223, 3,658,764, 3,380,964, 4,038,251 und 4,100,140).

Bei Verwendung von Carbonsäureimide-enthaltenden Systemen, wie z.B. bei der Herstellung von Verbundwerkstoffen und Prepregs, ist es erwünscht, dass die Systeme genügend rasch gehärtet werden können, nicht spröde und genügend klebrig sind, gute Schmiegsamkeitseigenschaften in Form von dünnen Filmen, eine geeignete Gelierzeit und gute Festigkeit und Stabilität aufweisen. Die vorbekannten Systeme erfüllen im allgemeinen mindestens eine dieser wichtigen Anforderungen nicht im genügenden Masse.

Es wurde nun gefunden, dass wesentlich verbesserte Eigenschaften erreicht werden können, wenn Gemische der erwähnten Dicarbonsäureimide, Polymaleinimide, Alkenylphenole oder Alkenylphenolether und Triallylisocyanurat verwendet werden. Diese Gemische weisen eine schnelle Härtung in Anwesenheit eines Härtungskatalysators, zufriedenstellende Biegsamkeit, Klebrigkeit, und Schmiegsamkeitseigenschaften und Gelierzeit, sowie gute mechanische, thermische und elektrische Eigenschaften auf. Die gehärteten Systeme sind somit für die Verwendung als Hochleistungs-Verbundstoffe und ähnliche Anwendungen gut geeignet. Diese Verbundstoffe bilden auch einen wichtigen Bestandteil der vorliegenden Erfindung.

Gegenstand der vorliegenden Erfindung sind heisshärtbare Stoffgemische enthaltend

a) 30—45 Gew.% mindestens einer Verbindung der Formel I

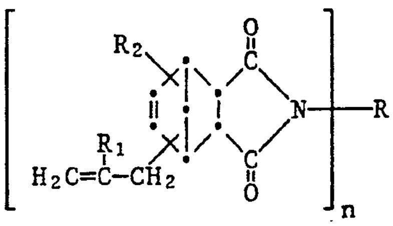

(I),

b) 20—40 Gew.% mindestens einer Verbindung der Formel II

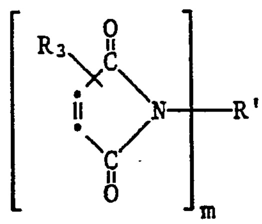

(II),

c) 11—22 Gew.% mindestens eines Alkenylphenols oder eines Alkenylphenolethers und

d) 12—16 Gew.% Triallylisocyanurat, bezogen auf das Gesamtgewicht, wobei in den Formeln I und II n 1 oder 2 bedeutet und m 2 oder 3 ist, R, bei n gleich 1, Wasserstoff, $C_1$—$C_{12}$-Alkyl, $C_3$—$C_6$-Alkenyl, $C_5$—$C_8$-Cycloalkyl, $C_6$—$C_{10}$-Aryl oder Benzyl, oder bei n gleich 2, —$C_pH_{2p}$—, worin p eine ganze Zahl von 2 bis 20 ist, oder $C_6$—$C_{10}$-Arylen oder eine Gruppe der Formel III

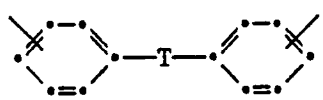

(III)

ist, worin T Methylen, Isopropyliden, —CO—, —O—, —S— oder —$SO_2$— bedeutet, R' ein m-wertiger organischer Rest mit 2 bis 30 Kohlenstoffatomen ist und $R_1$, $R_2$ und $R_3$ unabhängig voneinander ein Wasserstoffatom oder eine Methylgruppe sind.

Die EP—A—175 648, welche nicht vorpubliziert ist, beschreibt Stoffgemische enthaltend a) 10—90 Gew.% mindestens einer Verbindung der Formel I, b) 90—10 Gew.% mindestens einer Verbindung der Formel II und c) 0—30 Gew.% mindestens einer zur Reaktion mit der Komponente b) befähigten Verbindung, wie z.B. Diamine, Diole, Azomethine, Dicarbonsäuredihydrazide oder Hydrazide von Aminocarbonsäuren. Triallylisocyanurat wird darin nicht erwähnt.

Bei den Verbindungen der Formel I sind $R_1$ und $R_2$ vorzugsweise jeweils ein Wasserstoffatom.

R kann eine geradkettige oder verzweigte $C_1$—$C_{12}$-Alkylgruppe, wie z.B. Methyl, Ethyl, Isopropyl, n-Butyl, Isopentyl, n-Hexyl, 2-Ethylhexyl, n-Decyl und n-Dodecyl, vorzugsweise aber eine $C_1$—$C_8$-Alkylgruppe sein. Wenn R $C_3$—$C_6$-Alkenyl ist, kann dieser Rest auch geradkettig oder verzweigt sein, und ist

z.B. Allyl, Methallyl, 2-Butenyl oder 3-Hexenyl, wobei Allyl bevorzugt ist. Wenn R eine Cycloalkylgruppe ist, kann es Cyclopentyl, Cyclohexyl, Cycloheptyl oder Cyclooctyl bedeuten, wobei Cyclohexyl bevorzugt ist.

Wenn R eine Arylgruppe bedeutet, kann es eine unsubstituierte oder eine mit einer oder zwei Methylgruppen substituierte Phenylgruppe darstellen, wie z.B. Tolyl oder Xylyl, oder kann Naphthyl bedeuten. R ist vorzugsweise Phenyl. Wenn R eine $-C_pH_{2p}$-Gruppe ist, kann diese geradkettig oder verzweigt sein, z.B. Ethylen, Propylen, Trimethylen, Tetramethylen, Hexamethylen, Octamethylen und Dodecamethylen. R ist dabei vorzugsweise eine $-(CH_2)_p$-Gruppe, mit p gleich 2 bis 12. Wenn R eine Gruppe der Formel III ist, ist diese vorzugsweise in der 4,4'-Stellung zu den Stickstoffatomen gebunden.

Wenn R eine $C_6$—$C_{10}$-Arylengruppe darstellt, kann es sich um eine 1,3-Naphthylen-, 1,4-Naphthylen-, 1,5-Napthylen- oder 2,6-Napthylen oder vorzugsweise um eine m-Phenylen- oder p-Phenylengruppe handeln.

Wenn R eine Gruppe der Formel III darstellt, ist T vorzugsweise eine Methylengruppe, —O— oder $-SO_2-$.

Bevorzugt werden Verbindungen der Formel I, worin $R_1$ und $R_2$ jeweils ein Wasserstoffatom sind und R, bei n gleich 1, Wasserstoff, $C_1$—$C_8$-Alkyl, Allyl, Cyclohexyl, Phenyl oder Benzyl, oder bei n gleich 2, R $-(CH_2)_p-$ mit p gleich 2 bis 12, m- oder p-Phenylen, oder eine Gruppe der Formel III darstellt, worin T eine Methylengruppe, —O— oder $-SO_2-$ ist.

Besonders bevorzugte Verbindungen der Formel I sind solche, worin $R_1$ und $R_2$ jeweils ein Wasserstoffatom sind und R, bei n gleich 1, Allyl, oder bei n gleich 2, $-(CH_2)_6-$ oder

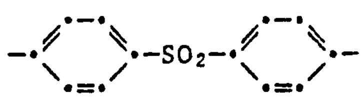 und vorzugsweise 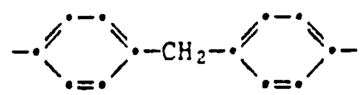

bedeutet.

Am meisten bevorzugt sind erfindungsgemässe Gemische, welche als Komponente (a) N-Allyl-allylbicyclo[2.2.1]hept-5-en-2,3-dicarbonsäureimid, Bis[4-(allylbicyclo)[2.2.1]hept-5-en-2,3-dicarboximidophenyl]methan oder N,N'-Hexamethylen-bis(allylbicyclo)[2.2.1]hept-5-en-2,3-dicarbonsäureimid oder Gemische dieser Verbindungen enthalten.

Beispiele für spezifische Verbindungen der Formel I sind:

Allyl-bicyclo[2.2.1]hept-5-en-2,3-dicarbonsäure-N-Methylimid, Allyl-bicyclo[2.2.1]hept-5-en-2,3-dicarbonsäure-N-allylimid, Allyl-bicyclo[2.2.1]hept-5-en-2,3-dicarbonsäure-N-(2-ethylhexyl)-imid, Allyl-bicyclo[2.2.1]hept-5-en-2,3-dicarbonsäure-N-cyclohexylimid, Allyl-bicyclo[2.2.1]hept-5-en-2,3-dicarbonsäure-N-phenylimid, Allyl-bicyclo[2.2.1]hept-5-en-2,3-dicarbonsäure-N-benzylimid, N,N'-Ethylen-bis-(allyl-bicyclo[2.2.1]hept-5-en-2,3-dicarbonsäureimid), N,N'-Hexamethylen-bis-(allyl-bicyclo[2.2.1]hept-5-en-2,3-dicarbonsäureimid), N,N'-Dodecamethylen-bis-(allyl-bicyclo[2.2.1]hept-5-en-2,3-dicarbonsäureimid), Bis-[4-(allyl-bicyclo[2.2.1]hept-5-en-2,3-dicarboximidophenyl)]-methan, Bis-[4-(methallyl-bicyclo[2.2.1]hept-5-en-2,3-dicarboximidophenyl)]-methan, N,N'-p-Phenylen-bis(allyl-bicyclo[2.2.1]hept-5-en-2,3-dicarbonsäureimid), Bis[4-(allyl-bicyclo[2.2.1]hept-5-en-2,3-dicarboximidophenyl)]-ether, Bis[4-(allyl-bicyclo[2.2.1]-hept-5-en-2,3-dicarboximidophenyl)]-sulfon, Allyl-methyl-bicyclo[2.2.1]hept-5-en-2,3-dicarbonsäure-N-allylimid, Allyl-methyl-bicyclo[2.2.1]hept-5-en-2,3-dicarbonsäure-N-(2-ethylhexyl)imid, Allyl-methyl-bicyclo[2.2.1]hept-5-en-2,3-dicarbonsäure-N-phenylimid, N,N'-Hexamethylen-bis-(allyl-bicyclo[2.2.1]hept-5-en-2,3-dicarbonsäureimid), Bis[4-(allyl-methyl-bicyclo[2.2.1]hept-5-en-2,3-dicarboximidophenyl)]methan und Bis[4-(methallyl-methyl-bicyclo[2.2.1]hept-5-en-2,3-dicarboximidophenyl)]sulfon.

Die Imide der Formel I können auf an sich bekannte Weise, z.B. analog dem in der EP—A—105 024 beschriebenen Verfahren durch Umsetzen eines Anhydrids der Formel IV

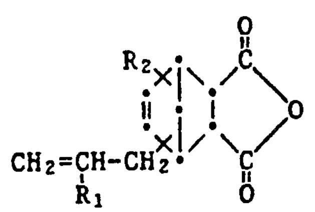 (IV)

mit einer Verbindung der Formel V

$$(H_2N)_n-R \qquad (V),$$

worin R, $R_1$, $R_2$ und n die unter Formel I angegebene Bedeutung haben, bei erhöhter Temperatur und unter Abdestillieren des bei der Reaktion entstehenden Wassers hergestellt werden. Sofern es sich bei den Verbindungen der Formel V um Ammoniak oder niedrigsiedende Monoamine handelt, ist ein Ueberschuss dieser Reaktanden zu empfehlen. Diamine sind vorteilhaft in stöchiometrischem Verhältnis einzusetzen. Die Umsetzung kann ohne Lösungsmittel oder in Gegenwart eines inerten Lösungsmittels, das für die azeotrope Entfernung des Wassers verwendbar ist (Schleppmittel) erfolgen. Die Temperatur der Umsetzung kann zwischen 100 und 250°C liegen. Bevorzugt werden die Imide der Formel I in der Schmelze

bei einem Druck von höchstens 4500 Pa bei Temperaturen zwischen 130 und 220°C, insbesondere 180 und 220°C, hergestellt.

Als organische Reste R' kommen bei m = 2 z.B. in Betracht: $—C_pH_{2p}—$ mit p = 2—20, besonders $—(CH_2)_p—$ mit p = 2—12, $—CH_2CH_2SCH_2CH_2—$, Arylen mit 6—10 C-Atomen, Xylylen, Cyclopentylen, Cyclohexylen, 1,4-Bis(methylen)cyclohexylen, der Rest des Bicyclohexylmethans oder Reste der Formeln VI oder VII

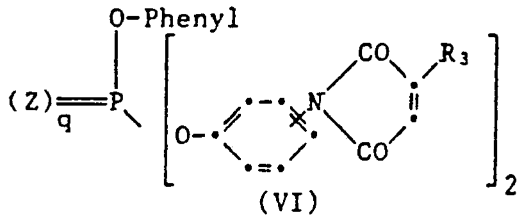

(VI)

oder

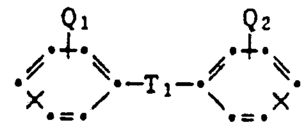

(VII).

Stellt m die Zahl 3 dar, so bedeutet R' z.B. einen Rest der Formel VIII

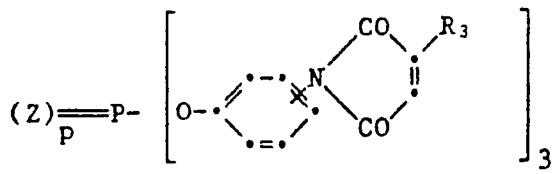

(VIII).

In den obigen Formeln VI bis VIII bedeutet $T_1$ Methylen, Isopropyliden, CO, O, S, $SO_2$, $—P{=}O(Q_3)$, $—NQ_3—$ ($Q_3$ = $C_1—C_4$-Alkyl), —N=N—, —CONH—, —COO—, $—NQ_3—CO—X—CO—NQ_3—$, —O—CO—X—CO—O,

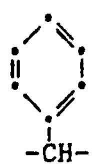

oder

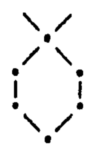

,

q ist O oder 1,

Z stellt O oder S dar,

$Q_1$ und $Q_2$ bedeuten unabhängig voneinander ein Halogenatom, besonders Chlor oder Brom, Methyl oder Ethyl und insbesondere ein Wasserstoffatom,

X ist die direkte Bindung, $—C_tH_{2t}—$ mit t = 1—12, Arylen mit 6—10 C-Atomen, Xylylen, Cyclopentylen oder Cyclohexylen und $R_3$ hat die oben angegebene Bedeutung.

Als spezielle Beispiele fur Maleinimide der Formel II, welche in den erfindungsgemässen Mischungen enthalten sein können, seien genannt:

N,N'-Ethylen-bis-maleinimid,
N,N'-Hexamethylen-bis-maleinimid,
N,N'-m-Phenylen-bis-maleinimid,
N,N'-p-Phenylen-bis-maleinimid,
N,N'-4,4'-Diphenylmethan-bis-maleinimid,
N,N'-4,4'-3,3'-Dichlor-diphenylmethan-bis-maleinimid,
N,N'-4,4'-Diphenylether-bis-maleinimid,
N,N'-4,4'-Diphenylsulfon-bis-maleinimid,
N,N'-m-Xylylen-bis-maleinimid,
N,N'-p-Xylylen-bis-maleinimid,
N,N'-4,4'-2,2-Diphenylpropan-bis-maleinimid,
das N,N'-Bis-maleinimid des 4,4'-Diamino-triphenylphosphats,
das N,N'-Bis-maleinimid des 4,4'-Diamino-triphenylphosphits,
das N,N'-Bis-maleinimid des 4,4'-Diamino-triphenylthiophosphats,
das N,N',N''-Trismaleinimid des Tris-(4-aminophenyl)-phosphats,
das N,N',N''-Trismaleinimid des Tris-(4-aminophenyl)-phosphits und
das N,N',N''-Trismaleinimid des Tris-(4-aminophenyl)-thiophosphats.

Als Verbindungen der Formel II sind solche bevorzugt, worin m die Zahl 2, $R_3$ ein Wasserstoffatom und R' $—(CH_2)_p—$ mit p = 2—12, m-oder p-Phenylen, m- oder p-Xylylen, 1,4-Cyclohexylen, 1,4-Bis(Methylen)-cyclohexylen, den Rest des 4,4'-Biscyclohexylmethans und vor allem einen in 4,4'-Stellung gebundenen

Rest der Formel VII bedeuten, worin $Q_1$ und $Q_2$ je ein Wasserstoffatom und $T_1$, O, $CH_2$ oder $SO_2$ darstellen. Ganz besonders bevorzugt ist das N,N',4,4'-Diphenylmethan-bismaleinimid.

Erfindungsgemäss werden als Alkenylphenole oder Alkenylphenolether vorzugsweise Allylphenole und Methylphenole bzw. deren Ether verwendet. Es können ein- oder mehrkernige, vorzugsweise zweikernige, Alkenylphenole und Alkenylphenolether verwendet werden. Vorzugsweise enthält dabei mindestens ein Kern sowohl eine Alkenylgruppe als auch eine gegebenenfalls veretherte phenolische OH-Gruppe.

Alkenylphenole können bekannterweise durch Umlagerung der entsprechenden Alkenylether der Phenole (z.B. des Allylethers des Phenols) durch Erwärmen hergestellt werden (Claisenumlagerung). Die Alkenylether werden auch auf bekannte Weise durch Umsetzung der Phenole mit z.B. Allylchlorid in Anwesenheit eines Alkalimetallhydroxids in Lösungsmitteln hergestellt.

Typische Beispiele sind Verbindungen der Formelm IX—XII:

Verbindungen der Formel IX

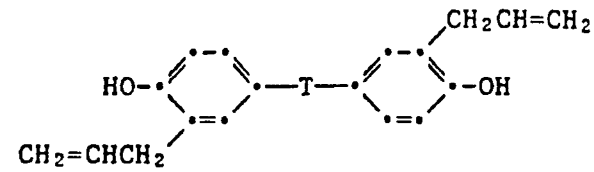

(IX),

worin T die direkte, Methylen, Isopropyliden, O, S, SO oder $SO_2$ bedeutet.

Alkenylsubstituierte Phenole der Formel X

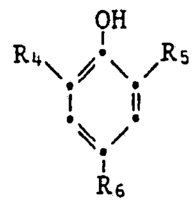

(X),

worin $R_4$, $R_5$ und $R_6$ unabhängig voneinander ein Wasserstoffatom oder eine $C_3$—$C_4$-Alkenylgruppe bedeuten, wobei mindestens eines von $R_4$ bis $R_6$ für eine Alkenyl-, vorzugsweise die Propenylgruppe steht.

Verbindungen der Formel XI

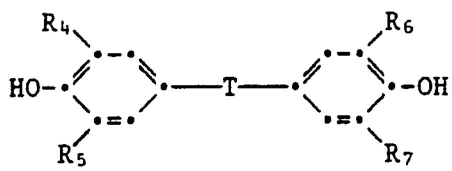

(XI),

worin $R_4$, $R_5$, $R_6$ und $R_7$ unabhängig voneinander ein Wasserstoffatom, oder eine $C_3$—$C_4$-Alkenyl-, vorzugsweise eine Allyl- oder Propenylgruppe bedeuten, wobei mindestens eines von $R_4$ bis $R_7$ für die Alkenylgruppe steht und T die direkte Bindung, Methylen, Isopropyliden, —O—, —S—, —SO— oder —$SO_2$— bedeutet.

Verbindungen der Formel XII

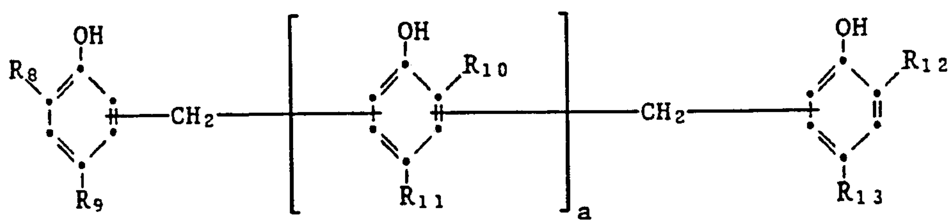

(XII),

worin $R_8$, $R_9$ $R_{10}$, $R_{11}$, $R_{12}$ und $R_{13}$ unabhängig voneinander ein Wasserstoffatom, Alkyl mit 1—4 C-Atomen, Alkenyl mit 3—4 C-Atomen, vorzugsweise Allyl oder Propenyl bedeuten, wobei mindestens eines von $R_8$ bis $R_{13}$ für eine Alkenyl-, vorzugsweise Allyl- oder Propenylgruppe steht und a einen Wert von 0 bis 10 darstellt. Es können auch Ether der Verbindungen der Formeln IX, X, XI und XII, welche mindestens einen —$OR_3$-Reste enthalten, verwendet werden, wobei $R_3$ $C_1$—$C_{10}$-Alkyl, $C_6$—$C_{10}$-Aryl oder $C_3$—$C_6$-Alkenyl, vorzugsweise Allyl oder Methallyl bedeutet. Bevorzugt sind Verbindungen der Formel XI, worin $R_4$ und $R_6$ je eine Propenylgruppe und $R_5$ und $R_7$ je ein Wasserstoffatom bedeuten und T für Methylen, Isopropyliden oder O steht.

Es können erfindungsgemäss auch Isomerengemische von propenyl- und allylsubstituierten ein- und mehrwertigen Phenolen eingesetzt werden. Bevorzugt werden Gemische von propenyl- und allylsubstituierten Phenolen der Formel IX eingesetzt, insbesondere solche der Formel IXa

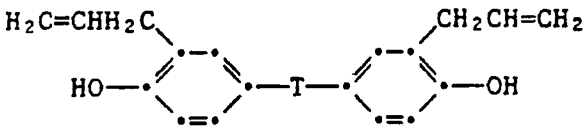 (IXa),

worin T Methylen, Isopropyliden oder O ist.

Gute Resultate werden auch mit Gemischen von mehrkernigen Alkenylphenolen und/oder Alkenylphenolethern mit einkernigen Alkenylphenolen und/oder Alkenylphenolethern erreicht.

Es können auch Gemische von Verbindungen, welche nur eine OH-Gruppe und nur eine Alkenylgruppe pro aromatischen Kern enthalten, mit Verbindungen, welche mehrere OH-Gruppen und/oder mehrere Alkenylgruppen pro aromatischen Kern aufweisen, oder Gemische der entsprechenden Phenylether dieser Verbindungen verwendet werden.

Solche alkenylsubstituierte Phenole und Polyole sind beispielsweise in US 4,100,140 und US 4,371,719 beschrieben.

Typische Verbindungen umfassen z.B. o,o'-Diallylbisphenol A, 4,4'-Dihydroxy-3,3'-diallylbiphenyl, Bis-(4-hydroxy-3-allylphenyl)-methan, 2,2-Bis(4-hydroxy-3,5-diallylphenyl)propan, Eugenol (4-Allyl-2-methoxyphenol), o,o'-Dimethallylbisphenol A, 4,4'-Di-hydroxy-3,3'-dimethallylbiphenyl, Bis(4-hydroxy-3-methallylphenyl)methan, 2,2-Bis(4-hydroxy-3,5-dimethallylphenyl)propan, 4-Methallyl-2-methoxyphenol, 2,2-Bis(4-methoxy-3-allylphenol)propan, 2,2-Bis(4-methoxy-3-methallylphenyl)propan, 4,4'-Dimethoxy-3,3'-diallylbiphenyl, 4,4'-Dimethoxy-3,3'-dimethallylbiphenyl, Bis(4-methoxy-3-allylphenyl)methan, Bis(4-methoxy-3-methallylphenyl)-methan, 2,2-Bis(4-methoxy-3,5-diallylphenyl)propan, 2,2-Bis(4-methoxy-3,5-dimethallylphenyl)propan, 4-Allylveratrol (4-Allyl-1,2-dimethoxybenzol) und 4-Methallylveratrol (4-Methallyl-1,2-dimethoxybenzol). Besonders bevorzugt ist o,o'-Diallylbisphenol A.

Vorzugsweise beträgt die Menge der Komponente (a) 30 bis 32 Gew.%, der Komponente (b) 36 bis 39 Gew.%, der Komponente (c) 12 bis 14 Gew.% und der Komponente (d) 13 bis 15 Gew.% bezogen auf das Gesamtgewicht des Stoffgemisches. Wenn die oben erwähnten drei bevorzugten Dicarbonsäureimide verwendet werden, werden sie in einem Gewichtsverhältnis von 3:2:1 und insbesondere 2,7:1,7:1 eingesetzt.

Die Herstellung der erfindungsgemässen Stoffgemische kann auf an sich bekannte Weise durch Vermahlen und Vermengen oder durch Aufschmelzen der Komponenten vorgenommen werden. Dies geschieht typischerweise bei Temperaturen von 90 bis 140°C.

Die Härtung bzw. Verarbeitung der Stoffgemische kann in einem inerten organischen Lösungsmittel, vorzugsweise jedoch aus der Schmelze erfolgen. Die Stoffgemische können als solche gehärtet werden. Die mechanischen Eigenschaften der gehärteten Produkte werden allerdings verbessert, wenn die Härtung in Anwesenheit eines Härtungskatalysators erfolgt. Als inerte organische Lösungsmittel eignen sich z.B. N,N-Dimethylformamid, N,N-Dimethylacetamid, N-Methylpyrrolidon, Toluol, Xylole, Methylethylketon und Ethylen glykolmonoalkyl- oder -dialkylether mit 1—4 C-Atomen in den Alkylgruppen. Je nach Art der eingesetzten Komponente c) und der beabsichtigten Verwendung kommen als Härtungskatalysatoren z.B. organische Peroxide, wie Di-tert-butylperoxid, Dicumylperoxid oder tert-Butylperbenzoat, oder basische Katalysatoren, vor allem primäre, sekundäre und tertiäre Amine in Betracht, wie z.B. Diethylamin, Tributylamin, Triethylamin, Benzylamin, N,N,N',N'-Tetramethyl-4,4'-diaminodiphenylmethan, N,N-Diisobutylaminoacetonitril und heterocyclische Basen, wie Chinolin, N-Methylpyrrolidin und Imidazol. Bevorzugt sind basische Katalysatoren der erwähnten Art. Die Härtung wird im allgemeinen bei Temperaturen zwischen 150 und 350°C, besonders 180 und 300°C vorgenommen.

Die erfindungsgemässen Stoffgemische stellen niederschmelzende Festharze oder Flüssigharze dar und zeichnen sich durch hohe Reaktivität und gute thermische und mechanische Eigenschaften der damit gehärteten Produkte aus, wie gute Biege-, Scher- und interlaminare Scherfestigkeit. So erhaltene Produkte weisen gute mechanische, thermische und elektrische Eigenschaften und hohe Glasumwandlungstemperaturen auf und sind wenig spröde. Die erfindungsgemässen Stoffgemische können ferner leicht aus der Schmelze, besonders auch ohne Zusatz von schwerflüchtigen Lösungsmitteln, beispielsweise zum Imprägnieren appliziert werden.

Während der Härtung bei erhöhter Temperatur entsteht ein Netzwerk mit hoher Vernetzungsdichte. Der hier verwendete Ausdruck Härtung bedeutet daher die Umwandlung von Gemischen in unlösliche und nichtschmelzbare vernetzte Produkte, mit gleichzeitiger Formung zu geformten Artikeln wie z.B. Giesskörpern, Presskörpern, Laminaten, oder zu zweidimensionalen Struckturen, wie z.B. Ueberzügen, Emaillen und Klebverbindungen. Die mit den modifizierten Systemen hergestellten Ueberzüge zeichnen sich z.B. durch erhöhte Zähigkeit aus.

Die erfindungsgemässen Stoffgemische können in jeder Vararbeitungsphase vor der Härtung mit den üblichen Modifizierungsmitteln vermischt werden, wie z.B. Streckmittel, Füllstoffe und Verstärkungsmittel, Pigment, Farbstoffe, organische Lösungsmittel, Plastifizierungsmittel, Mittel zur Verbesserung der

Trockenklebrigkeit (Klebrigmacher), Gummis, Beschleuniger, Verdünner usw. Als Streckmittel, Verstärkungsmittel, Füllstoffe und Pigmente kommen z.B. in Frage: Kohleteer, Bitumen, Glasfasern, Borfasern, Kohlefasern, Cellulose, Polyethylenpulver, Polypropylenpulver, Glimmer, Asbest, Quarzpulver, Gips, Antimontrioxid, Bentone, Siliziumdioxidaerogel ("Aerosil"), Lithopon, Barit, Titandioxid, Russ, Graphit, Eisenoxid oder Metallpulver wie z.B. Aluminiumpulver oder Eisenpulver. Den härtbaren Stoffgemische können auch andere übliche Zusätze, wie z.B. Flammschutzmittel, Thixotropiemittel, Verlaufsmittel, wie Silicone, Celluloseacetatbutyrate, Polyvinylbutyrate, Wachse, Stearate und ähnliches (welche zum Teil auch als Formtrennmittel verwendet werden) beigegeben werden.

Wenn die erfindungsgemässen Zusammensetzungen z.B. als Klebstoffformulierungen verwendet werden, können auch carboxylgruppenendständiger Acrylnitril-Butadien-Kautschuk, Modifizierungsharze, wie Triglycidyl-p-aminophenol und Beschleuniger wie Bortrifluorid-Mono-ethylaminkomplexe, oder Imidazolkomplexe beigegeben werden.

Gegenstand der vorliegenden Erfindung sind daher auch Produkte, erhältlich durch Härtung der erfindungsgemässen Zusammensetzungen, sowie Laminate, erhältlich durch Erhitzen eines mit der erfindungsgemässen Zusammensetzung imprägnierten Materials.

Die beschriebenen erfindungsgemässen Zusammensetzungen können auf verschiedenen Gebieten eingesetzt werden, wie z.B. in Verbundstoffen, Leiterplatten, Giesslingen, Formkörpern, Klebstoffen und Ueberzügen. Von besonderem Interesse ist ihre Anwendung für die Herstellung von Hochleistungsverbundstoffen, welche z.B. in der Luftfahrtindustrie sehr wichtig sind. So können die modifizierten Harze zum Präimprägnieren von verschiedenem faserartigem Material verwendet werden, welches als Deckschicht für Honigwabenstrukturen oder als Strukturteile eingesetzt wird. Verfahren zur Herstellung von Prepregs sind dem Fachmann bekannt. Als faserartige Materialien können z.B. Graphit, Glas oder Kevlar verwendet werden. Auch Verfahren zur Herstellung von Laminaten sind bekannt. Laminate verschiedenster Dicke können z.B. durch Pressformen oder Autoklavformen hergestellt werden. Die erfindungsgemässen Zusammensetzungen können auch erfolgreich als hatfvermittelnde Substanzen eingesetzt werden.

In den folgenden Beispielen sind einige bevorzugte Ausführungsformen der vorliegenden Erfindung beschrieben.

Beispiel 1

Ein typisches erfindungsgemässes Stoffgemisch wird durch Zusammenmischen von 25 g N,N'-Hexamethylen-bis(allylbicyclo[2.2.1]hept-5-en-2,3-dicarbonsaüreimid), 40 g Triallylisocyanurat, 35 g 2,2'-Bis(4-hydroxy-3-allylphenyl)propan und 15 g N-Allyl-allyl-bicyclo[2.2.1]hept-5-en-2,3-dicarbonsäureimid in einer Aluminiumkanne erhalten. Das Gemisch wird auf 95°C auf einer Heizplatte erhitzt und mit einem luftgetriebenen Propellerrührer vermischt. 100 g zerkleinertes Bismaleinimid (eutektisches Bismaleinimidgemisch der Technochemie, verkauft unter der Bezeichnung "C—353") werden in kleinen Portionen dem Gemisch beigegeben. Das Stoffgemisch wird während 20 Minuten bei 95°C gehalten und ständig gerührt. Die Temperatur wird auf 135°C erhöht und 40 g pulverförmiges N,N'-4,4'-Diphenylmethan-bis(allyl-bicyclo[2.2.1]hept-5-en-2,3-dicarbonsäureimid werden in kleinen Portionen beigegeben. Das Gemisch wird dann noch 15 Minuten bei der angegebenen Temperatur gerührt, auf 115°C gekühlt und durch einen zweischichtigen Trikotfilter filtriert. Das resultierende Gemisch ist bei 115°C eine homogene hochfliessende Flüssigkeit.

Beispiele 2 und 3:

Beispiel 1 wird unter Verwendung der folgenden Komponenten wiederholt:

| | Teile 2 | Teile 3 |
|---|---|---|
| N,N'-Hexamethylen-bis(allylbicyclo[2.2.1]-hept-5-en-2,3-dicarbonsäureimid | 9,0 | 9,5 |
| Triallylisocyanurat | 14,3 | 15,2 |
| 2,2'-Bis(4-hydroxy-3-allylphenyl)propan | 12,6 | 13,3 |
| N-Allyl-allylbicyclo[2.2.1]hept-5-en-2,3-dicarbonsäureimid | 10,8 | 5,7 |
| Bismaleinimid (eutektisches Bismaleinimid-gemisch der Technochemie, verkauft unter der Bezeichnung "C-353") | 36,0 | 38,0 |
| N,N'-4,4'-Diphenylmethan-bis(allylbicyclo-[2.2.1]hept-5-en-2,3-dicarbonsäureimid | 14,3 | 15,2 |
| 4,4'-Diaminodiphenylmethan | 2,9 | 3,0 |

Die erhaltenen Gemische sind bei 115°C homogene, hochfliessende, bernsteinfarbige Flüssigkeiten.

Beispiel 4:

Herstellung der Laminate

Ein unidirectionales Graphitprepreg wird aus der Thornel® T—500 Graphitfaser (Union Carbide) unter Anwendung von Druck und Hitze auf einer U—D Maschine hergestellt. Das ergibt ein Prepreg mit annehmbarer Schmiegsamkeit und Klebrigkeit. Das Prepreg wird geschnitten, zum Laminat aufeinandergeschichtet, mit dem Vakuumsackverfahren im Autoklav gehärtet und im Ofen nachgehärtet. Das Laminat im Vakuumsack wird in ein Autoklav unter Vakuum bei Raumtemperatur gestellt. Auf den Sack wird ein Druck von 0,6 MPa (85 psi) appliziert und der Autoklav wird während 15 Minuten bei Raumtemperatur equilibriert. Dann wird mit einer Geschwindigkeit von 1,7°C/min geheizt bis die Temperatur von 80°C erreicht wird. Das Vakuum wird entlüftet und der Autoklav während 2 Stunden bei 80°C unter Druck gehalten. Am Ende der zweiten Stunde wird wieder mit 1,7°C/min auf 175°C erhitzt und diese Temperatur 4 Stunden gehalten. Der Autoklav wird während 1½ Stunden abkühlen elassen, der Druck wird gelüftet und die Laminate werden aus dem Autoklav und aus dem Vakuumsack entfernt.

Die Nachhärtung der Laminate erfolgt freistehend in einem Ofen während 4 Stunden bei 245°C mit einer Aufheizrate von etwa 3°C/min. Die nachgehärteten Laminate werden zu Testkörpern zerschnitten und geprüft. Der Harzgehalt der Laminate beträgt 27 bis 28 Gew.%.

Prüfmethoden

Die gehärteten Stoffgemische werden mit thermomechanischer Analyse (TMA) geprüft (Eindringverfahren, Heizgeschwindigkeit 10°C/min, Probekörper 0,86 × 1,24 mm). Die Glasumwandlungstemperatur Tg ist aus der Tabelle ersichtlich.

Mit jedem der oben beschriebenen Systeme werden aus 15 Schichten des Prepregs 0° Laminatplatten hergestellt. Aus diesen Laminaten werden Prüfkörper für die Scherfestigkeit im Kurzbiegeversuch sowie 0° und 90° Biegeprüfkörper hergestellt. Der Kurzbiegeversuch wird nach ASTM D—2344 bei Raumtemperatur und bei 175°C durchgeführt. Die 0° und 90° Biegeeigenschaften werden nach ASTM D—790 bei Raumtemperatur und bei 175°C getestet. Die Resultate sind aus der Tabelle ersichtlich.

Zusätzlich wird die Bruchzähigkeit [gemäss Journal of Material Science Letters, 511—515 (1982)] und die Randdelaminierung getestet. Der GIC Test wird mit Prüfkörpern von 76 × 38 mm gemessen. Die 0° Laminatplatte für diesen Test ist 12-schichtig. Der Randdelaminierungstest wird mit Laminatplatten mit der folgenden Sequenz bei der Aufschichtung von Prepregs durchgeführt $[(\pm 25)_2/90]s$. Die Resultate sind wie folgt:

Tabelle

| Test | Beispiel 1 | | Beispiel 2 | | Beispiel 3 | |
|---|---|---|---|---|---|---|
| Tg (°C) | – | | – | | 303 | |
| | RT | 175°C | RT | 175°C | RT | 175°C |
| 0° Biegefestigkeit ($N/mm^2$) | 1932,9 | 1197,2 | 2000,2 | 1177,9 | 2108,9 | 1423,5 |
| 90° Biegefestigkeit ($N/mm^2$) | 94,8 | 46,4 | 118,8 | 39,4 | 111,8 | 49,5 |
| Scherfestigkeit im Kurzbiegeversuch ($N/mm^2$) | 110,4 | 56,8 | 114,2 | 54,3 | 113,9 | 65,1 |
| Bruchzähigkeit ($J/m^2$) | 175,3 | – | 210,3 | – | 210,3 | – |
| Randdelaminierung ($N/mm^2$) | 253,1 | – | 254,9 | – | 268,2 | – |

Die Resultate zeigen die verbesserten Leistungseigenschaften der erfindungsgemässen Stoffgemische.

**Patentansprüche**

1. Heisshärtbare Stoffgemische enthaltend
a) mindestens einer Verbindung der Formel I

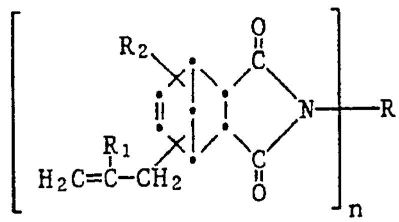

(I),

b) mindestens einer Verbindung der Formel II

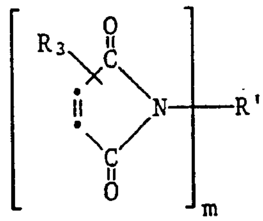

(II),

c) mindestens ein Alkenylphenol oder eine Alkenylphenolether und
d) Triallylisocyanurat, wobei in den Formeln I und II n 1 oder 2 bedeutet und m 2 oder 3 ist, R, bei n gleich 1, Wasserstoff, $C_1$—$C_{12}$-Alkyl, $C_3$—$C_6$-Alkenyl, $C_5$—$C_8$-Cycloalkyl, $C_6$—$C_{10}$-Aryl oder Benzyl, oder bei n gleich 2, $—C_pH_{2p}—$, worin p eine ganze Zahl von 2 bis 20 ist, oder $C_6$—$C_{10}$-Arylen oder eine Gruppe der Formel III

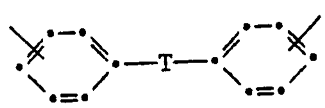

(III)

ist, worin T Methylen, Isopropyliden, —CO—, —O—, —S— oder $—SO_2—$ bedeutet, R' ein m-wertiger organischer Rest mit 2 bis 30 Kohlenstoffatomen ist und $R_1$, $R_2$ und $R_3$ unabhängig voneinander ein Wasserstoffatom oder eine Methylgruppe sind, wobei die Mengen der Komponente (a) 30 bis 45 Gew.%, der Komponente (b) 20 bis 40 Gew.%, der Komponente (c) 11 bis 22 Gew.% und der Komponente (d) 12 bis 16 Gew.% bezogen auf das Gesamtgewicht betragen.

2. Stoffgemisch nach Anspruch 1, worin $R_1$ und $R_2$ Wasserstoff sind.

3. Stoffgemisch nach Anspruch 1, worin $R_1$ und $R_2$ Wasserstoff sind und R, bei n gleich 1, Wasserstoff, $C_1$—$C_8$-Alkyl, Allyl, Cyclohexyl, Phenyl oder Benzyl, oder, bei n gleich 2, $—(CH_2)_p—$, wobei p eine ganze Zahl von 2 bis 12 ist, m- oder p-Phenylen, oder eine Gruppe der Formel III, worin T eine Methylengruppe, —O— oder $—SO_2—$ bedeutet, darstellt.

4. Stoffgemisch nach Anspruch 1, worin $R_1$ und $R_2$ Wasserstoff und R, bei n gleich 1, Allyl, oder bei n gleich 2, $—(CH_2)_6—$,

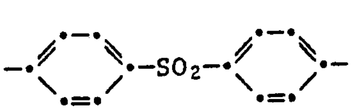

oder

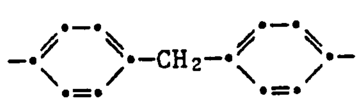

sind.

sind.

5. Stoffgemisch nach Anspruch 1, worin die Komponente (a) N-Allyl-allylbicyclo[2.2.1]hept-5-en-2,3-dicarbonsäureimid, Bis-[4-(allylbicyclo)[2.2.1]hept-5-en-2,3-dicarboximidophenyl]methan oder N,N'-Hexamethylen-bis(allylbicyclo)[2.2.1]hept-5-en-2,3-dicarbonsäureimid oder ein Gemische dieser Verbindungen ist.

6. Stoffgemisch nach Anspruch 1, worin m 2 ist, $R_3$ Wasserstoff und R' $—(CH_2)_p—$, wobei p eine ganze Zahl von 2 bis 12 ist, m- oder p-Phenylen, m- oder p-Xylylen, 1,4-Cyclohexylen, 1,4-Bis(methylen)-cyclohexylen, der Rest von 4,4'-Biscyclohexylmethan oder ein Rest der Formel VIIa

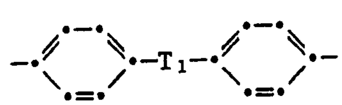

(VIIa),

worin $T_1$ —O—, $—CH_2—$ oder $—SO_2—$ ist, bedeuten.

7. Stoffgemisch nach Anspruch 1, worin die Komponente (b) N,N',4,4'-Diphenylmethan-bismaleinimid ist.

8. Stoffgemisch nach Anspruch 1, worin die Komponente (c) ein Alkenylphenol der Formeln X, XI oder XII ist

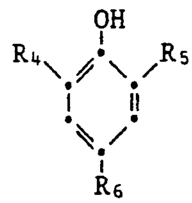

(X),

worin $R_4$, $R_5$ und $R_6$ unabhängig voneinander Wasserstoff oder $C_3$—$C_4$-Alkenyl sind, mit der Massgabe, dass mindestens einer der Reste $R_4$—$R_6$ Alkenyl ist

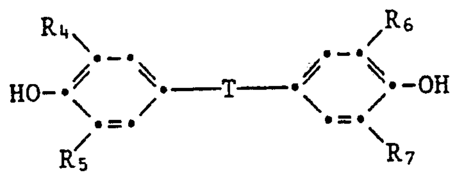

(XI),

worin T eine direkte Bindung, Methylen, Isopropyliden, —O—, —S—, —SO— oder —$SO_2$— ist und $R_4$, $R_5$, $R_6$ und $R_7$ unabhängig voneinander Wasserstoff oder $C_3$—$C_4$-Alkenyl sind, mit der Massgabe, dass mindestens einer der Reste $R_4$—$R_7$ eine Alkenylgruppe ist, und

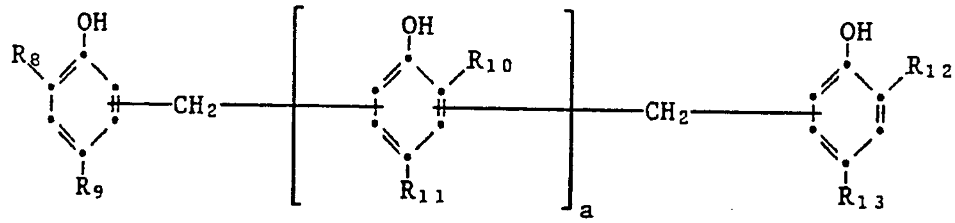

(XII),

worin $R_8$, $R_9$, $R_{10}$, $R_{11}$, $R_{12}$ und $R_{13}$ unabhängig voneinander Wasserstoff, $C_1$—$C_4$-Alkyl oder $C_3$—$C_4$-Alkenyl sind, mit der Massgabe, dass mindestens einer der Reste $R_8$—$R_{13}$ Alkenyl ist, und a eine Zahl von 0 bis 10 bedeutet, oder die Ether der Verbindungen der Formeln X, XI und XII, enthaltend mindestens einen —$OR_3$ Rest, worin $R_3$ $C_1$—$C_{10}$-Alkyl, $C_6$—$C_{10}$-Aryl oder $C_3$—$C_6$-Alkenyl bedeutet.

9. Stoffgemisch nach Anspruch 8, worin die Alkenylgruppe eine Allyl- oder Propenylgruppe ist.

10. Stoffgemisch nach Anspruch 9, worin das Alkenylphenol o,o'-Diallylbisphenol A ist.

11. Stoffgemisch nach Anspruch 1 enthaltend ein Gemisch von N-Allyl-allylbicyclo[2.2.1]hept-5-en-2,3-dicarbonsäureimid, Bis-[4-(allylbicyclo)[2.2.1]hept-5-en-2,3-dicarboximidophenyl]methan, N,N'-Hexamethylen-bis(allylbicyclo)[2.2.1]hept-5-en-2,3-dicarbonsäureimid, N,N',4,4'-Diphenylmethanbismaleinimid, o,o'-Diallylbisphenol A und Triallylisocyanurat.

12. Stoffgemisch nach Anspruch 1 enthaltend zusätzlich einen Härtungskatalysator.

13. Produkt erhältlich durch Härtung des Stoffgemisches nach Anspruch 1.

14. Laminat erhältlich durch Erhitzen und Formen eines mit dem Stoffgemisch nach Anspruch 1 imprägnierten Materials.

**Revendications**

1. Mélanges thermodurcissables qui contiennent:

a) au moins un composé de Formule I:

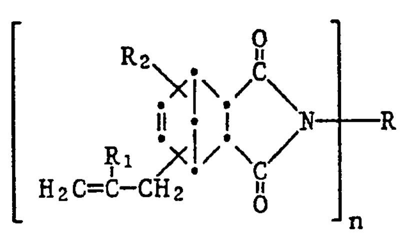

(I),

b) au moins un composé de Formule II:

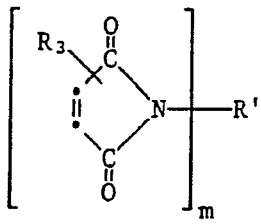

(II),

c) au moins un alcényl-phénol ou un éther d'alcénylphénol et

d) de l'isocyanurate de triallyle formules I et II dans lesquelles:

n est égal à 1 ou à 2,

m est égal à 2 ou à 3,

R représente: dans le cas où n est égale à 1, l'hydrogène, un alkyle en $C_1$—$C_{12}$, un alcényle en $C_3$—$C_6$, un cycloalkyle en $C_5$—$C_8$, un aryle en $C_6$—$C_{10}$ ou un benzyle, et dans le cas où n est égal à 2, un radical —$C_pH_{2p}$— dans lequel p désigne un nombre entier de 2 à 20, un radical arylène en $C_6$—$C_{10}$ ou un radical de Formule III:

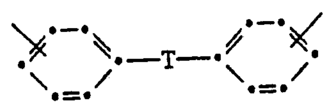

(III)

dont le symbole T représente un radical méthylène, isopropylidène, —CO—, —O—, —S— ou —$SO_2$—,

R' représente un radical organique de valence égale à m qui contient de 2 à 30 atomes de carbone et

$R_1$, $R_2$ et $R_3$ représentent chacun, indépendamment les uns des autres, un atome d'hydrogène ou un radical méthyle, la quantité de la composante (a) étant comprise entre 30 et 45% en poids, celle de la composante (b) entre 20 et 40% en poids, celle de la composante (c) entre 11 et 22% en poids et celle de la composante (d) entre 12 et 16% en poids, par rapport au poids total.

2. Mélange selon la revendication 1 dans lequel $R_1$ et $R_2$ représentent chacun l'hydrogène.

3. Mélange selon la revendication 1 dans lequel $R_1$ et $R_2$ représentent chacun l'hydrogène et R représente, dans le cas où n est égal à 1, l'hydrogène, un alkyle en $C_1$—$C_8$, un allyle, un cyclohexyle, un phényle ou un benzyle et, dans le cas où n est égal à 2, un radical —$(CH_2)_p$— dont l'indice p désigne un nombre entier de 2 à 12, un radical m- ou p-phénylène, ou un radical de Formule III dans lequel le symbole T représente un radical méthylène, —O— ou —$SO_2$—.

4. Mélange selon la revendication 1 dans lequel $R_1$ et $R_2$ représentent chacun l'hydrogène et R représente, dans le cas où n est égal à 1, un radical allyle et, dans le cas où n est égal à 2, un radical —$(CH_2)_6$—,

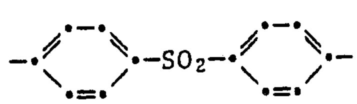

ou

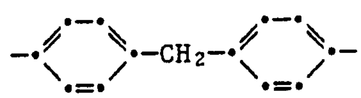

5. Mélange selon la revendication 1, dans lequel la composante (a) est le N-allyl-imide de l'acide allyl-bicyclo[2.2.1]heptène-5 dicarboxylique-2,3, les bis-[(allyl-bicyclo[2.2.1]heptène-5 dicarboxylique-2,3)-4 phényl]méthane ou le N,N'-hexaméthylène-bis-(allylbicyclo[2.2.1]heptène-5 dicarboximide-2,3, ou un mélange de ces composés.

6. Mélange selon la revendication 1 dans lequel m est égal à 2, $R_3$ représente l'hydrogène et R' représente un radical —$CH_2)_p$— dans lequel l'indice p désigne un nombre entier de 2 à 12, un radical m- ou p-phénylène, un radical m- ou p-xylylène, un cyclohexylène-1,4, un bis-méthylène-1,4 cyclohexylène, le radical bis-cyclohexylène-4,4' méthane ou un radical répondant à la Formule VIIa:

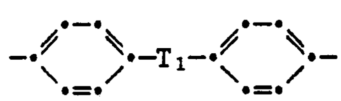

(VIIa),

dans laquelle $T_1$ représente —O—, —$CH_2$— ou —$SO_2$—.

7. Mélange selon la revendication 1, dans lequel la composante (b) est le bis-maléimido-4,4' diphénylméthane.

8. Mélange selon la revendication 1, dans lequel la composante (c) est un alcényl-phénol répondant à l'une des Formules X, XI et XII:

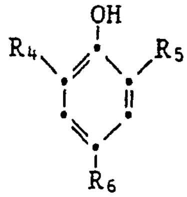

(X),

dans laquelle $R_4$, $R_5$ et $R_6$ représentent chacun, indépendamment les uns des autres, l'hydrogène ou un alcényle à 3 ou 4 atomes de carbone, avec la condition qu'au moins un de ces symboles représente un alcényle,

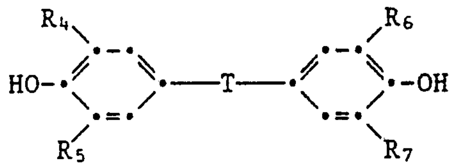

(XI),

dans laquelle T représente une liaison directe ou un radical méthylène, isopropylidène, —O—, —S—, —SO— ou —$SO_2$—, et $R_4$, $R_5$, $R_6$ et $R_7$, représentent chacun, indépendamment les uns des autres, l'hydrogène ou un alcényle à trois ou quatre atomes de carbone, avec la condition qu'au moins un de ces symboles $R_4$ à $R_7$ représente un alcényle, et

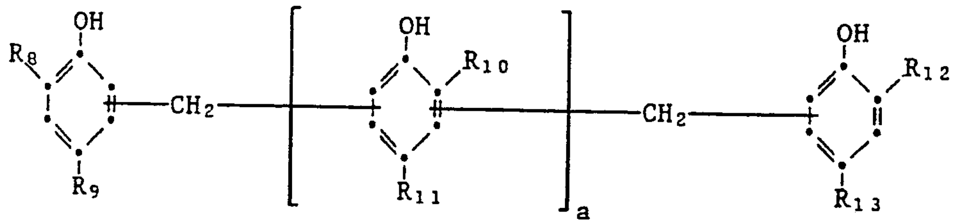

(XII),

dans laquelle $R_8$, $R_9$, $R_{10}$, $R_{11}$, $R_{12}$ et $R_{13}$ représentent chacun, indépendamment les uns des autres, l'hydrogène, un alkyle en $C_1$—$C_4$ ou un alcényle à 3 ou 4 atomes de carbone, avec la condition qu'au moins un de ces symboles $R_8$ à $R_{13}$ représente un alcényle, et a désigne un nombre de 0 à 10, ou un éther d'un composé de Formule X, XI ou XII qui contient au moins un radical —$OR_3$ dans lequel $R_3$ représente un alkyle en $C_1$—$C_{10}$, un aryle en $C_6$—$C_{10}$ ou un alcényle en $C_3$—$C_6$.

9. Mélange selon la revendication 8 dans lequel l'alcényle est un radical allyle ou propène-1 yle.

10. Mélange selon la revendication 9 dans lequel l'alcényl-phénol est l'o,o'-diallyl-bis-phénol A.

11. Mélange selon la revendication 1 qui contient un mélange de N-allyl-imide de l'acide allyl-bicyclo[2.2.1]heptène-5 dicarboxylique-2,3, les bis-[(allyl-bicyclo[2.2.1]heptène-5 dicarboximido-2,3)-4 phényl]méthane de N,N'-hexaméthylène-bis-(allylbicyclo[2.2.1]heptène-5 dicarboximide-2,3), de bis-maléimido-4,4'-diphénylméthane, d'o,o'-diallyl-bis-phénol A et d'isocyanurate de triallyle.

12. Mélange selon la revendication 1 qui contient en outre un catalyseur de durcissement.

13. Produit qui peut être obtenu par durcissement d'un mélange selon la revendication 1.

14. Stratifié qui peut être fabriqué par chauffage et moulage d'une matière imprégnée avec le mélange selon la revendication 1.

**Claims**

1. A heat-curable mixture comprising

a) at least one compound of the formula I

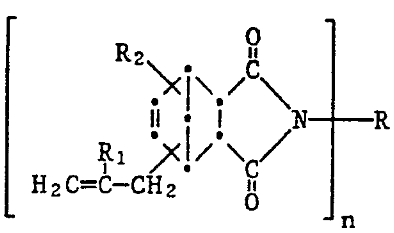

(I),

b) at least one compound of the formula II

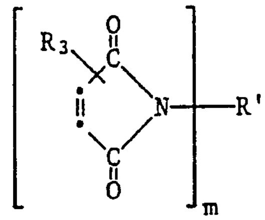

(II),

c) at least one alkenyl phenol or alkenyl phenol ether, and

d) triallyl isocyanurate, in which formulae I and II above n is 1 or 2 and m is 2 or 3, if n is 1, R is hydrogen, $C_1$—$C_{12}$alkyl, $C_3$—$C_6$alkenyl, $C_5$—$C_8$cycloalkyl, $C_6$—$C_{10}$aryl or benzyl, or if n is 2, R is $—C_pH_{2p}—$, in which p is an integer from 2 to 20, or is $C_6$—$C_{10}$arylene or a group of the formula III

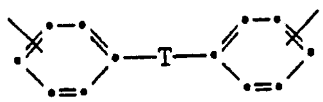

(III)

in which T is methylene, isopropylidene, —CO—, —O—, —S—, or $—SO_2—$, R′ is an m-valent organic radical of 2 to 30 carbon atoms, and $R_1$, $R_2$ and $R_3$ are each independently of one another a hydrogen atom or a methyl group, the amount of component (a) being 30 to 45% by weight, the amount of component (b) being 20 to 40% by weight, the amount of component (c) being 11 to 22% by weight and the amount of component (d) being 12 to 16% by weight, based on total weight.

2. A mixture according to claim 1, in which $R_1$ and $R_2$ are hydrogen.

3. A mixture according to claim 1, in which $R_1$ and $R_2$ are hydrogen and, if n is 1, R is hydrogen, $C_1$—$C_8$alkyl, allyl, cyclohexyl, phenyl or benzyl, or, if n is 2, R is $—(CH_2)_p—$, in which p is an integer from 2 to 12, or is m- or p-phenylene, or a group of the formula III, in which T is a methylene group, —O— or $—SO_2—$.

4. A mixture according to claim 1, in which $R_1$ and $R_2$ are hydrogen and, if n is 1, R is allyl or, if n is 2, R is $—(CH_2)_6—$,

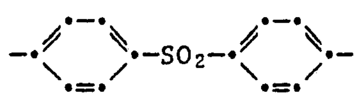

or

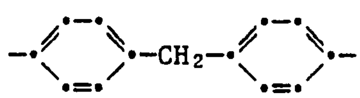

5. A mixture according to claim 1, in which component (a) is N-allyl-allylbicyclo[2.2.1]hept-5-ene-2,3-dicarboximide, bis[4-(allylbicyclo)[2.2.1]hept-5-ene-2,3-dicarboximidophenyl]methane or N,N′-hexamethylen-bis(allylbicyclo[2.2.1]hept-5-ene-2,3-dicarboximide), or a mixture of these compounds.

6. A mixture according to claim 1, in which m is 2, $R_3$ is hydrogen and R′ is $—(CH_2)_p—$, in which p is an integer from 2 to 12, or is m- or p-phenylene, m- or p-xylylene, 1,4-cyclohexylene, 1,4-bis-(methylene)cyclohexylene, the radical of 4,4′-biscyclohexylmethane or a radical of the formula VIIa

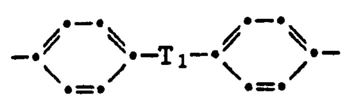

(VIIa),

in which $T_1$ is —O—, $—CH_2—$ or $—SO_2—$.

7. A mixture according to claim 1, in which component (b) is N,N′,4,4′-diphenylmethane-bismaleimide.

8. A mixture according to claim 1, in which component (c) is an alkenyl phenol of the formulae X, XI or XII

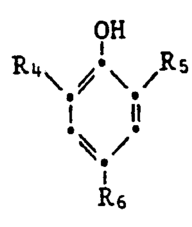

(X),

in which $R_4$, $R_5$ and $R_6$ are independently of one another hydrogen or $C_3$—$C_4$alkenyl, with the proviso that at least one of the radicals $R_4$—$R_6$ is alkenyl,

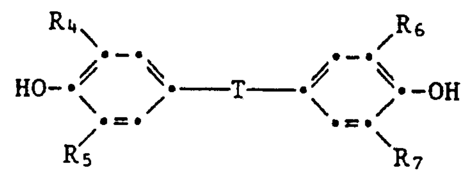

(XI),

in which T is a direct bond, methylene, isopropylidene, —O—, —S—, —SO— or —$SO_2$—, and $R_4$, $R_5$, $R_6$ and $R_7$ are independently of one another hydrogen or $C_3$—$C_4$alkenyl, with the proviso that at least one of the radicals $R_4$—$R_7$ is an alkenyl group, and

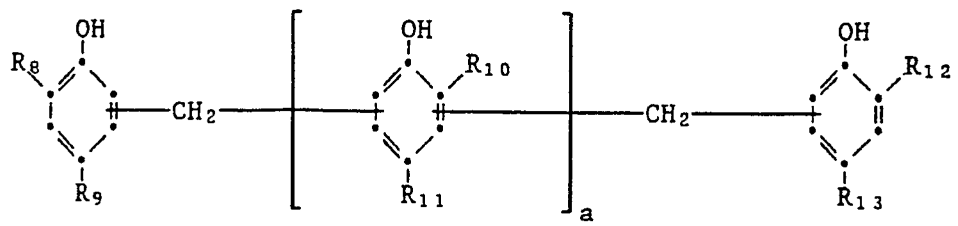

(XII),

in which $R_8$, $R_9$, $R_{10}$, $R_{11}$, $R_{12}$ and $R_{13}$ are independently of one another hydrogen, $C_1$—$C_4$alkyl or $C_3$—$C_4$alkenyl, with the proviso that at least one of the radicals $R_8$—$R_{13}$ is alkenyl and a is a number from 0 to 10, or the ethers of the componds of the formulae X, XI and XII containing at least one —$OR_3$ radical in which $R_3$ is $C_1$—$C_{10}$alkyl, $C_6$—$C_{10}$aryl or $C_3$—$C_6$alkenyl.

9. A mixture according to claim 8, in which the alkenyl group is an allyl or propenyl group.

10. A mixture according to claim 9, in which the alkenyl phenol is o,o'-diallyl-bisphenol A.

11. A mixture according to claim 1 containing a mixture of N-allyl-allylbicyclo[2.2.1]hept-5-ene-2,3-dicarboximide, bis[4-(allylbicyclo)[2.2.1]hept-5-ene-2,3-dicarboximidophenyl]methan or N,N'-hexamethylen-bis(allylbicyclo)[2.2.1]hept-5-ene-2,3-dicarboximide), N,N',4,4'-diphenylmethane-bismaleimide, o,o'-diallyl-bisphenol A and triallyl isocyanurate.

12. A mixture according to claim 1 additionally containing a curing catalyst.

13. A product obtainable by curing the mixture according to claim 1.

14. A laminate obtainable by heating and shaping a material impregnated with the mixture according to claim 1.